# EUROPÄISCHE PATENTSCHRIFT

(11) **EP 2 127 851 B1**
(45) Veröffentlichungstag und Bekanntmachung des Hinweises auf die Patenterteilung: **20.06.2012**
(21) Anmeldenummer: 09161400.8
(22) Anmeldetag: 28.05.2009
(51) Int. Cl.: B29C 49/58, B29C 49/06

(54) **Vorrichtung und Verfahren zum Expandieren von Behältnissen mit an der Mündung des Behältnisses anliegender Dichtung**
Device and method for expanding containers with seal at the opening of the container
Dispositif et procédé d'expansion de récipients dotés d'un joint adjacent à l'embouchure du récipient

(30) Priorität: 29.05.2008 DE 102008025880
(43) Veröffentlichungstag der Anmeldung: 02.12.2009
(73) Patentinhaber: Krones AG, 93073 Neutraubling (DE)
(72) Erfinder: Stoiber, Christian, 93185 Michelsneukirchen (DE); Fleischmann, Hans-Jürgen, 92449 Steinberg am See (DE)
(74) Vertreter: Bittner, Bernhard

(56) Entgegenhaltungen:
- CH-A5- 690 003
- JP-A- 2007 144 630
- JP-A- 2008 012 720
- US-A- 4 552 527

## Beschreibung

Die vorliegende Erfindung bezieht sich auf eine Vorrichtung zum Behandeln von Behältnissen und insbesondere eine Vorrichtung zum Expandieren von Behältnissen bzw. eine Blasdüse zum Blasen von Behältnissen. Aus dem Stand der Technik ist es im Rahmen der Herstellung verschiedener Gefäße bekannt, diese mit Hilfe einer Blasdüse aufzublasen. Dazu werden entsprechende Rohlinge erwärmt und dann mit Druckluft unter einem Druck im Bereich von 40 bar durch eine Blasdüse beaufschlagt. Aufgrund des hohen Druckes soll dabei generell ein Austreten von Luft oder einem anderen gasförmigen Medium, mit Hilfe dessen das Behältnis expandiert wird, aus einer Druckkammer verhindert werden. So sind aus dem Stand der Technik Vorrichtungen bekannt, welche einen Dichtring aufweisen, der sich vor dem eigentlichen Blasvorgang an den Kragen oder Tragring des Behältnisses anlegt und auf diese Weise einen dichten Raum schafft. Im Rahmen von Maßnahmen zur Kosten- und Gewichtsreduzierung wird jedoch in jüngerer Zeit auch der erwähnte Kragen der Rohlinge in radialer Richtung reduziert, so dass teilweise die Dichtung nicht mehr, wie bisher üblich, in Längsrichtung des Behältnisses auf diesen aufgesetzt werden kann.

Aus der EP 0 768 944 B1 ist eine Dichtungsvorrichtung zwischen einer Vorform eines Behälters aus Kunststoff und einer Blasdüse sowie eine solche Dichtungsvorrichtung verwendende Blasformmaschine bekannt. Dabei weist eine Blasdüse eine Dichtung auf, die sich während der Beaufschlagung der Düse mit Luftdruck gegen eine Innenwandung des aufzublasenden Behältnisses drückt. Dabei wird bei dieser Ausführungsform jedoch eine vollständige Dichtigkeit erst erreicht, wenn sich ein gewisser Druck im Inneren des Behältnisses aufgebaut hat.

Aus der DE 698 00 516 T2 ist eine Blasdüse für einen Behälter aus Kunststoff und eine Vorrichtung, die eine solche Blasdüse verwendet, bekannt. Hier legt sich ein Dichtkörper nicht an das Behältnis selbst, sondern eine Tragplatte, die den Vorformling hält, ab. Aus der GB 2 114 502 A ist ein Verfahren zum Formen von hohlen thermoplastischen Körpern bekannt. Dabei wird ebenfalls eine Vorform in einer abgedichteten Art und Weise an einen Blaskopf angeschlossen.

In der Offenlegungsschrift DE 10 2007 013 096.3 wurde beschrieben, dass eine Dichtungseinrichtung im Wesentlichen in radialer Richtung gegen den Außenumfang der Mündung des Behältnisses pressbar ist. Durch diese radiale Zustellung der Dichtungseinrichtung kann eine Verbesserung der Dichtwirkung zwischen dem Behältnis und der Blasdüse erreicht werden.

Der vorliegenden Erfindung liegt die Aufgabe zugrunde, eine Vorrichtung zum Behandeln von Behältnissen und insbesondere eine Blasdüse zum Aufblasen von Behältnissen zur Verfügung zu stellen, welche während des Blasvorgangs eine sichere Abdichtung auch bei Vorformlingen mit in radialer Richtung reduzierten Kragen bzw. Tragringen ermöglicht. Daneben soll die in der oben genannten Anmeldung beschriebene Vorrichtung hinsichtlich ihrer Zuverlässigkeit noch weiter verbessert werden.

Dies wird erfindungsgemäß durch eine Vorrichtung zum Expandieren von Behältnissen nach Anspruch 1 und ein Verfahren zum Expandieren von Behältnissen nach Anspruch 15 erreicht. Vorteilhafte Ausführungsformen und Weiterbildungen sind Gegenstand der Unteransprüche.

Eine erfindungsgemäße Vorrichtung zum Expandieren von Behältnissen und insbesondere von Vorformlingen mittels eines gasförmigen Mediums weist eine Düseneinrichtung auf, welche das Behältnis mit dem gasförmigen Medium befüllt. Weiterhin ist ein Wandungskörper vorgesehen, der wenigstens einen Bereich der Düseneinrichtung in deren Umfangsrichtung vollständig umgibt. Weiterhin weist die Vorrichtung eine Dichtungseinrichtung auf um einen Raum zwischen dem Behältnis und dem Wandungskörper abzudichten, wobei die Dichtungseinrichtung im Wesentlichen in radialer Richtung gegen einen Außenumfang des Behältnisses pressbar ist.

Erfindungsgemäß weist die Dichteinrichtung einen vorzugsweise oberen Abdichtbereich auf, der wenigstens während des Expansionsvorganges in einen in der Längsrichtung des Behältnisses zwischen dem Behältnis und der Düseneinrichtung liegenden Bereich ragt. Mit anderen Worten weist die Dichtungseinrichtung wenigstens einen Abschnitt auf, der einen geringeren Querschnitt aufweist als der Mündungsquerschnitt des Behältnisses.

Damit wird erfindungsgemäß vorgeschlagen, dass die Düseneinrichtung während des Expansionsvorgangs nicht direkt auf dem Behältnis aufsitzt, sondern der Abdichtbereich zwischen der Düseneinrichtung und dem Behältnis liegt und bevorzugt während des Expansionsvorgangs zwischen dem Behältnis und der Düseneinrichtung eingeklemmt wird. Durch dieses Zwischenlegen des Abdichtbereichs wird die Dichtwirkung während der Expansion des Behältnisses verbessert.

Vorzugsweise erstreckt sich dieser Abdichtbereich im Wesentlichen radial nach Innen und bevorzugt auch geringfügig nach unten bzw. in Richtung des Behältnisses. Die Dichtungseinrichtung ist bevorzugt einteilig ausgebildet.

Bei einer weiteren vorteilhaften Ausführungsform ist der Abdichtbereich während des Expansionsvorgangs oberhalb der Mündung des Behältnisses angeordnet bzw. liegt an dem Rand der Mündung an.

Bei einer weiteren vorteilhaften Ausführungsform weist der Abdichtbereich einen ringförmigen Querschnitt auf und dichtet damit einen Bereich zwischen der Düseneinrichtung und dem Behältnis voll umfänglich ab.

Vorteilhaft weist die (im Folgenden auch als Dichtung bezeichnete) Dichtungseinrichtung einen sich in einer Längsrichtung des Behältnisses erstreckenden Stützabschnitt auf, der in der radialen Richtung gegen ein Gewinde des Behältnisses pressbar ist. Damit wird bei dieser bevorzugten Ausführungsform nicht nur eine radiale Zustellung der Dichtung an die Mündung des Behältnisses vorgesehen, sondern die Dichtung wird entlang eines vorgegebenen Bereichs an das Behältnis angedrückt. Damit erfolgt auch bei dieser Vorgehensweise die Abdichtung des Preforms bzw. Vorformlings oben an dem Vorformling. Zusätzlich zu der Abdichtung wird jedoch der Vorformling bzw. dessen Gewinde von außen durch die Dichtungseinrichtung gestützt, indem sich die Dichtungseinrichtung in einem vorgegebenen Bereich in der Längsrichtung an das Gewinde bzw. an die Mündung des Behältnisses anlegt. Vorzugsweise legt sich der Stützabschnitt vollumfänglich an das Gewinde bzw. die Mündung des Behältnisses an, um auf diese Weise eine allseitige Abstützung zu erreichen. Unter der radialen Richtung wird dabei eine radiale Richtung in Bezug auf das Behältnis bzw. eine Längsrichtung des Behältnisses verstanden.

Vorzugsweise erstreckt sich der Stützabschnitt in der Längsrichtung wenigstens entlang der halben Länge des Gewindes und besonders bevorzugt entlang des gesamten Gewindes des Behältnisses. Damit erfolgt ein Andrücken der Dichtungseinrichtung entlang des vollständigen Gewindes des Vorformlings und bevorzugt auch in einem Bereich, der sich auch oberhalb und unterhalb des Gewindes erstreckt. Neben der Dichtwirkung erfüllt die Dichtungseinrichtung damit auch eine Stützfunktion und bewirkt einen Druckausgleich im Bereich der Mündung des Behältnisses während des Expansionsvorgangs.

Bei einer weiteren vorteilhaften Ausführungsform weist die Düseneinrichtung einen Querschnitt auf, der auf einen Querschnitt einer Mündung des zu expandierenden Behältnisses angepasst ist. Damit ist es möglich, die Düseneinrichtung auf die Mündung des Behältnisses aufzusetzen um diese zu expandieren. Es wäre jedoch auch möglich, die Düseneinrichtung in die Mündung des Behältnisses einzuführen um dieses zu expandieren. In diesem Fall würde der Abdichtbereich nach innen gedrückt werden.

Bei einer weiteren vorteilhaften Ausführungsform weist die Vorrichtung eine Öffnung auf, durch welche hindurch während des Blasvorgangs ein auch bezüglich der Dichtungseinrichtung radial außenliegender Raum mit dem gasförmigen Medium beaufschlagbar ist. Genauer gesagt wird die Dichtungseinrichtung mit dem Blasdruck beaufschlagt und legt sich auf diese Weise an das Behältnis bzw. an dessen Gewinde an. Auf diese Weise kann auf eine zusätzliche Ansteuerung der Dichtungseinrichtung verzichtet werden. Es wäre jedoch auch möglich, die Dichtungseinrichtung zusätzlich zu deren radialer Zustellung mit einem weiteren Luftdruck zu beaufschlagen.

Bei einer weiteren vorteilhaften Ausführungsform ist die Dichtungseinrichtung elastisch. Auf diese Weise kann in besonders günstiger Weise sowohl die radiale Zustellung als auch wieder die Entspannung der Dichtungseinrichtung nach der Beaufschlagung mit Luft erreicht werden.

Bei einer weiteren vorteilhaften Ausführungsform ist die Dichtungseinrichtung in der Längsrichtung der Düseneinrichtung gegen einen Abstützbereich, insbesondere einen Abstützbereich des Wandungskörpers, abgestützt. Dieser Abstützbereich verläuft dabei vorteilhaft in einer zu der Längsrichtung senkrecht stehenden Ebene. Entlang dieses Abstützbereiches kann die Dichtungseinrichtung bzw. ein Bestandteil dieser Dichtungseinrichtung gleiten. Vorzugsweise ist der Abstützbereich einteilig mit dem Wandungskörper ausgebildet.

Bei einer weiteren vorteilhaften Ausführungsform weist die Dichtungseinrichtung einen ersten Halteabschnitt auf, der fest gegenüber dem Wandungskörper angeordnet ist. Vorzugsweise handelt es sich hierbei um ein Eingriffsmittel, welches mit dem Wandungskörper oder einem fest mit dem Wandungskörper verbundenen Element in Verbindung steht. Damit wird ein Rückstellen der Dichtungseinrichtung in eine Ruhestellung erleichtert.

Bei einer weiteren vorteilhaften Ausführungsform weist die Dichtungseinrichtung einen an dem Wandungskörper bzw. dessen Abstützbereich anliegenden Anlegebereich auf. Dieser Anlegebereich ist dabei vorteilhaft gegenüber dem Wandungskörper verschiebbar und besonders bevorzugt in einer radialen Richtung des Behältnisses verschiebbar.

Bei einer weiteren vorteilhaften Ausführungsform ist der Anlegebereich in der Längsrichtung unterhalb des Stützabschnitts angeordnet. Dies bedeutet, dass sich bei einem Beaufschlagen mit Luft sowohl dieser Anlegebereich gegenüber dem Wandungskörper radial nach Innen bewegt als auch sich der Stützabschnitt auf das Gewinde des Behältnisses zu bewegt.

Vorzugsweise ist der Halteabschnitt oberhalb des Stützabschnitts angeordnet. Auf diese Weise wird ein Herausnehmen der Dichtungseinrichtung aus der Vorrichtung erleichtert. Es wäre jedoch auch möglich, umgekehrt die Dichtungseinrichtung in einem unterhalb des Stützabschnitts liegenden Bereich fest anzuordnen und veschiebbar in einem oberhalb des Stützabschnitts liegenden Bereich.

Bei einer weiteren vorteilhaften Ausführungsform weist die Düseneinrichtung eine ringförmige Anlagefläche auf, die über den Abdichtbereich die auf den Rand des Behältnisses andrückbar ist. Durch diese ringförmige Ausgestaltung, wobei diese ringförmige Anlagefläche eine vorgegebene Breite aufweist, ist es möglich, Vorformlinge auch mit leicht unterschiedlichen Mündungsquerschnitten zu expandieren.

Die vorliegende Erfindung ist weiterhin auf ein Verfahren zum Expandieren von Behältnissen mittels eines gasförmigen Mediums gerichtet, wobei eine Düseneinrichtung an oder in eine Mündung des Behältnisses geführt wird, um dieses mit dem gasförmigen Medium zu befüllen und wobei ein Wandungskörper um den Außenumfang der Mündung geschoben wird, wobei eine Dichtungseinrichtung in radialer Richtung an dem Außenumfang der Mündung des Behälnisses angelegt wird, um einen zwischen dem Behältnis und dem Wandungskörper liegenden Raum abzudichten.

Erfindungsgemäß weist die Dichtungseinrichtung einen bevorzugt oberen Abdichtbereich auf, der während des Expansionsvorgangs zwischen einem Mündungsrand des Behältnisses und der Düseneinrichtung liegt.

Weitere Vorteile und Ausführungsformen ergeben sich aus den beigefügten Zeichnungen:

Darin zeigen:
- Fig. 1: eine erfindungsgemäße Vorrichtung in einem auf ein Behältnis aufgesetzten Zustand;
- Fig. 2a - d: vier Ansichten einer erfindungsgemäßen Dichtungseinrichtung in einer ersten Ausführungsform;
- Fig. 3: eine erfindungsgemäße Vorrichtung in einer weiteren Ausführungsform; und
- Fig. 4a - d: Vier Ansichten einer erfindungsgemäßen Dichtung in einer weiteren Aus- führungsform.

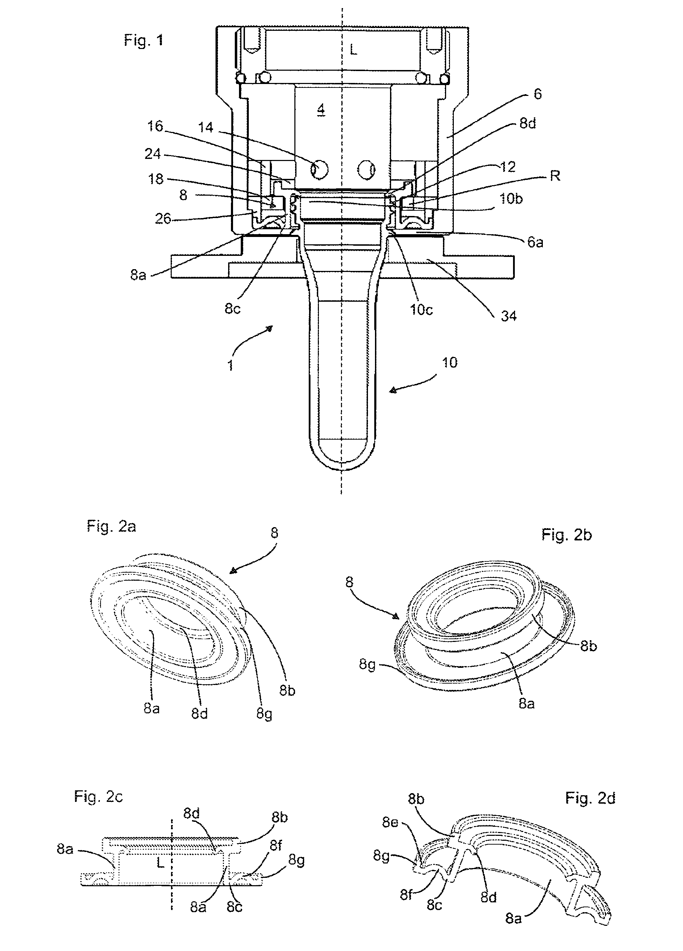

Fig. 1 zeigt eine erfindungsgemäße Vorrichtung 1, welche auf ein Behältnis 10, genauer auf einen Vorformling 10 aufgesetzt ist, um diesen mit Druckluft zu expandieren. Dabei weist die Vorrichtung 1 eine Düseneinrichtung 4 auf, welche auf eine Mündung 10a des Behältnisses 10 aufgesetzt wird. Diese Düseneinrichtung 4 ist dabei mit Hilfe einer Feder bzw. einer Vorspanneinrichtung in Richtung der Mündung des Behältnisses d.h. in Fig. 1 nach unten vorbelastet.

Das Bezugszeichen 6 bezieht sich auf einen Wandungskörper, der die Düseneinrichtung 4 im Wesentlichen vollständig umgibt. Zwischen der Düseneinrichtung 4 und dem Behältnis 10. genauer einen oberen Rand der Mündung 10b des Behältnisses 10 ist ein Abdichtbereich 8d einer Dichtungseinrichtung 8 angeordnet.

Bei einer Druckbelastung des Behältnisses gelangt die Druckluft über eine Öffnung 14 in einen Raum 16 und von dort in einen Raum 18, der radial außerhalb der Dichtungseinrichtung 8 liegt. Durch diesen erhöhten Luftdruck wird die Dichtungseinrichtung radial nach innen auf das Gewinde 12 des Behältnisses 10 zugestellt. Auf diese Weise wird einerseits der Raum zwischen dem Wandungskörper 6 und der Düseneinrichtung 4 bei Beaufschlagung mit Druckluft abgedichtet und andererseits auch das Behältnis 10 abgestützt. Auf diese Weise wird die Stabilität des Behältnisses 10 während des Blasvorgangs erhöht.

Damit nimmt die erfindungsgemäße Dichtungseinrichtung 8 und entsprechend auch die unten im Detail beschriebene Dichtungseinrichtung 28 mehrere Funktionen wahr, nämlich nicht nur das Abdichten des Raums zwischen dem Wandungskörper 6 und dem Behältnis 10 sondern auch eine Verbesserung der Abdichtung zwischen der Düseneinrichtung 4 und dem Behältnis 10.

Ein Anlegebereich 8c der Dichtungseinrichtung verschiebt sich während der Beaufschlagung mit Druckluft radial nach innen, damit sich der Stützabschnitt 8a der Dichtungseinrichtung 8 an das Gewinde 12 anlegen kann. Ein Halteabschnitt 8b der Dichtungseinrichtung 8 ist fest gegenüber dem Wandungskörper 6 und insbesondere in einem Haltering 24 angeordnet. Das Bezugszeichen 34 bezieht sich auf einen Träger, der den Vorformling 10 hält. Dabei stützt sich der Vorformling bzw. das Behältnis 10 mit seinem Tragring 10c gegenüber diesem Träger ab. Der Anlegebereich 8c bzw. dessen Endabschnitt ist dabei gegenüber einem Abstützbereich bzw. Auflagebereich 6a des Wandungskörpers 6 abgestützt. Der Anlegebereich 8 bzw. dessen Endabschnitt bewegt sich in einer Ebene, die im Wesentlichen senkrecht zu der Längsrichtung L steht.

Fig. 2a zeigt eine perspektivische Ansicht einer erindungsgemäßen Dichtungseinrichtung 8. Diese Dichtungseinrichtung 8 weist einen Stützabschnitt 8a auf, der sich bevorzugt geradlinig bzw. zylinderförmig in der Längsrichtung L des Behältnisses erstreckt. In dem oberen Bereich dieses Stützabschnitts 8a ist ein erster Halteabschnitt 8b angeordnet, der, wie oben erwähnt, in einem Haltering 24 angeordnet wird.

Das Bezugszeichen 8g bezieht sich auf einen zweiten Halteabschnitt, der im eingebauten Zustand in einem weiteren Haltering 26 (vgl. Fig. 1) der Vorrichtung 1 angeordnet ist. Damit ist bei der gezeigten Ausführungsform die Dichtungseinrichtung an zwei Halteabschnitten gehalten, wobei diese Halteabschnitte hier bevorzugt an entgegengesetzten Endbereichen der Dichtungseinrichtung liegen. Durch diese zweifache Arretierung bzw. Einspannung wird eine besonders vorteilhafte Rückstellung der Dichtungseinrichtung 8 erreicht, sobald keine Druckbeaufschlagung auf der Dichtungseinrichtung 8 mehr vorliegt.

Fig. 2b zeigt eine weitere perspektivische Darstellung der erfindungsgemäßen Dichtungseinrichtung. Man erkennt, dass der zweite Halteabschnitt 8g in der radialen Richtung weiter nach außen ragt als der erste Halteabschnitt 8b. Auf diese Weise wird erreicht, dass die Dichtungseinrichtung insbesondere nicht erst durch die radiale Zustellung eine Dichtwirkung erzielt, sondern bereits in ihrer Grundstellung den Raum R zwischen dem Behältnis 10 und dem Wandungskörper 6 abdichtet.

Fig. 2c zeigt eine Schnittdarstellung einer erfindungsgemäßen Dichtungseinrichtung. Man erkennt hier sowohl den ersten Halteabschnitt 8b als auch den zweiten Halteabschnitt 8g. Weiterhin ist bei dieser Darstellung der Abdichtbereich 8d gut erkennbar, der sich während des Expansionsvorgangs an einen oberen Rand des Behältnisses 10 anlegt. Dieser Abdichtbereich 8d verläuft dabei radial nach innen und auch schräg nach unten, legt sich also bevorzugt über einen Rand bzw. Mündungsrand des Behältnisses 10 an. Bevorzugt weist dieser Abdichtbereich 8d an seinem Ende eine abgerundete Fläche auf bzw. eine halbkreisförmig ausgestaltete Ballung auf. Durch diese Ausführungsform wird eine besonders effiziente Abdichtung während des Expansionsvorgangs erreicht. Das Bezugszeichen 8f bezieht sich auf einen gekrümmten Bereich des Anlegebereichs 8c. Während der Expansion wird dieser gekrümmte Bereich gedehnt und auf diese Weise wird eine Verschiebung des Stützabschnitts 8a radial nach Innen d.h. auf das Gewinde des Behältnisses 10 zu erleichtert. Dies bedeutet, dass sich hier im Wesentlichen nur der radial innenliegende Abschnitt des Anlegebereichs gegenüber dem Auflagebereich 6a des Wandungskörpers 6 bewegt.

Fig. 2d zeigt eine weitere geschnittene perspektivische Darstellung einer erfindungsgemäßen Dichtungseinrichtung 8. Man erkennt auch hier wiederum, dass sich der Abdichtbereich 8d in einem ersten Abschnitt radial nach innen und anschließend schräg nach unten erstreckt, um, wie oben erwähnt, den Mündungsrand des Behältnisses 10 zu umgreifen. Durch diese Ausgestaltung des Abdichtbereichs 8d ist eine relativ hohe Varianz bezüglich der Größen der Düseneinrichtungen 4 möglich, da diese sich sowohl auf dem radial nach innen verlaufenden Bereich des Abdichtbereichs 8d abstützen können als auch auf dem schräg verlaufenden Bereich.

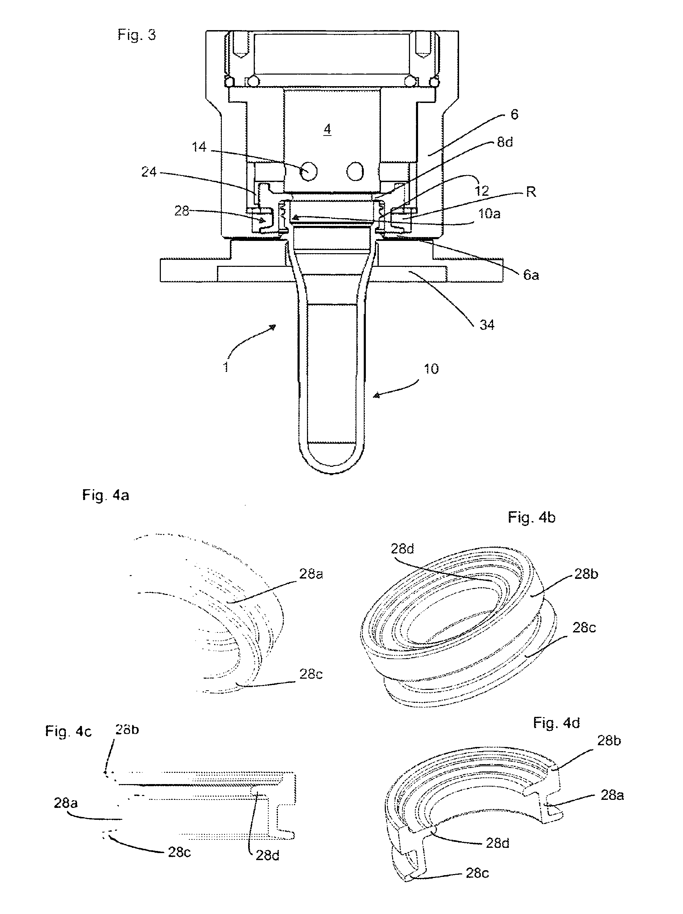

Fig. 3 zeigt eine weitere Ausführungsform einer erfindungsgemäßen Vorrichtung 1. Der wesentliche Unterschied zu der in Fig. 1 gezeigten Vorrichtung besteht in der Ausgestaltung der Dichtungseinrichtung. Während die in Fig. 1 gezeigte Dichtungseinrichtung 8 sowohl an dem oberen Halteabschnitt 8b als auch an dem unteren Halteabschnitt 8g gehalten wird, wird, wie in Fig. 3 gezeigt, die Dichtungseinrichtung 8 lediglich an einem oberen Halteabschnitt als auch einem unteren Halteabschnitt 8g gehalten wird, wird wie in Fig. 3 gezeigt, die Dichtungseinrichtung 28 lediglich an dem oberen Halteabschnitt 28b gehalten.

Die Figuren 4a - d zeigen vier Darstellungen einer erfindungsgemäßen Dichtungseinrichtung 28 in einer weiteren Ausführungsform. Dabei weist diese Dichtungseinrichtung 28 einen Anlegebereich 28c auf, der jedoch gegenüber dem Wandungskörper 6 bzw. einem Abstützbereich 6a dieses Wandungskörpers 6 verschiebbar ist. Der Halteabschnitt 28b weist hier einen ebenfalls zylinderförmigen Außenbereich 28h auf, der die Stabilität der gesamten Dichtung 28 erhöht. Dieser Abschnitt 28h ist gemeinsam mit dem Halteabschnitt 28b fest in der Vorrichtung bzw. dem Haltering 24 angeordnet und der Stützabschnitt 28a bewegt sich bei einer Druckbeaufschlagung.

Wie in Fig. 4b gezeigt, verläuft bei dieser Dichtungseinrichtung 28 der Abdichtbereich 28d im Wesentlichen radial nach Innen und nur leicht schräg nach unten. Eine Wandungsstärke der Dichtungseinrichtung 28 in dem Anlegebereich 28c und auch dem Stützabschnitt 28a ist erheblich geringer als in dem Bereich des Halteabschnitts 28b.

Bevorzugt verläuft auch der Anlagebereich 28c zumindest leicht schräg gegenüber einer senkrecht zu der Längsrichtung L stehenden Ebene.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 4: Düseneinrichtung
- 6: Wandungskörper
- 6a: Auflagebereich des Wandungskörpers
- 8,28: Dichtungseinrichtung
- 8a, 28a: Stützabschnitt
- 8b, 28b: erster (oberer) Halteabschnitt
- 8c, 28c: Anlegebereich
- 8d, 28d: Abdichtbereich
- 8g: zweiter (unterer) Halteabschnitt
- 8f: gekrümmter Bereich
- 10: Vorformling, Behältnis
- 10a: Mündung
- 10c: Tragring
- 12: Gewinde
- 14: Öffnung
- 16,18: Raum
- 22: Vorspanneinrichtung
- 24: Haltering
- 28h: Außenbereich der Dichtungseinrichtung 28
- 34: Träger
- L: Längsrichtung

## Patentansprüche

1. Vorrichtung (1) zum Expandieren von Behältnissen (10) mittels eines gasförmigen Mediums, mit einer Düseneinrichtung (4), welche das Behältnis (10) mit dem gasförmigen Medium befüllt, und mit einem Wandungskörper (6), der wenigstens einen Bereich der Düseneinrichtung (4) in Umfangsrichtung vollständig umgibt und mit einer Dichtungseinrichtung (8, 28), um einen Raum (R) zwischen dem Behältnis (10) und dem Wandungskörper (6) abzudichten, wobei die Dichtungseinrichtung (8,28) in im Wesentlichen radialer Richtung gegen einen Außenumfang des Behältnisses (10) pressbar ist,
**dadurch gekennzeichnet, dass**
die Dichtungseinrichtung (8,28) einen Abdichtbereich (8d, 28d) aufweist, der wenigstens während des Expansionsvorgangs in einen in der Längsrichtung (L) des Behältnisses zwischen dem Behältnis (10) und der Düseneinrichtung (4) liegenden Bereich ragt.

2. Vorrichtung (1) nach Anspruch 1,
**dadurch gekennzeichnet, dass**
der Abdichtbereich (8d, 28d) während des Expansionsvorgangs oberhalb der Mündung (10b) des Behältnisses (10) angeordnet ist.

3. Vorrichtung (1) nach wenigstens einem der vorangegangenen Ansprüche,
**dadurch gekennzeichnet, dass**
der Abdichtbereich (8d, 28d) einen ringförmigen Querschnitt aufweist.

4. Vorrichtung (1) nach wenigstens einem der vorangegangenen Ansprüche,
**dadurch gekennzeichnet, dass**
die Dichtungseinrichtung (8, 28) einen sich in einer Längsrichtung (L) des Behältnisses (10) erstreckenden Stützabschnitt (8a, 28a) aufweist, der in der radialen Richtung gegen ein Gewinde (10a) des Behältnisses (10a) pressbar ist.

5. Vorrichtung (1) nach Anspruch 1,
**dadurch gekennzeichnet, dass**
die Düseneinrichtung (4) einen Querschnitt aufweist, der auf einen Querschnitt der Mündung (10b) des zu expandierenden Behältnisses (10) angepasst ist.

6. Vorrichtung (1) nach Anspruch 1
**dadurch gekennzeichnet, dass**
die Vorrichtung eine Öffnung (14) aufweist, durch welche hierdurch während des Blasvorganges auch ein bezüglich der Dichtungseinrichtung (8, 28) radial außen liegender Raum mit dem gasförmigen Medium beaufschlagbar ist.

7. Vorrichtung (1) nach wenigstens einem der vorangegangenen Ansprüche,
**dadurch gekennzeichnet, dass**
die Dichtungseinrichtung (8, 28) in der Längsrichtung (L) der Düseneinrichtung (4) gegen einen Abstützbereich (6a) des Wandungskörpers (6) abgestützt ist.

8. Vorrichtung nach wenigstens einem der vorangegangenen Ansprüche,
**dadurch gekennzeichnet, dass**
die Dichtungseinrichtung (8, 28) einen ersten Halteabschnitt (8b, 28b) aufweist, der fest gegenüber dem Wandungskörper (6) angeordnet ist.

9. Vorrichtung(1) nach wenigstens einen der vorangegangenen Ansprüche
**dadurch gekennzeichnet, dass**
die Dichtungseinrichtung (8, 28) einen an dem Wandungskörper (6) anliegenden Anlegebereich (8c. 28c) aufweist.

10. Vorrichtung (1) nach Anspruch 9,
**dadurch gekennzeichnet, dass** der Anlegebereich (8c) einen gekrümmten Abschnitt (8f) aufweist.

11. Vorrichtung (1) nach Anspruch 9,
**dadurch gekennzeichnet, dass**
der Anlegebereich (8c, 28c) in der radialen Richtung bewegbar gegenüber dem Wandungskörper (6) ist.

12. Vorrichtung (1) nach Anspruch 9,
**dadurch gekennzeichnet, dass**
der Anlegebereich (8c, 28c) in der Längsrichtung (L) unterhalb des Stützabschnitts (8a, 28a) angeordnet ist.

13. Vorrichtung (1) nach Anspruch 8,
**dadurch gekennzeichnet, dass**
der erste Halteabschnitt (8d, 28d) oberhalb des Stützabschnitts (8a, 28a) angeordnet ist

14. Vorrichtung (1) nach wenigstens einem der vorangegangenen Ansprüche,
**dadurch gekennzeichnet, dass**
die Düseneinrichtung (4) eine ringförmige Anlagefläche aufweist, die über den Abdichtbereich (8d, 28d) auf einen Rand des Behältnisses (10) andrückbar ist.

15. Verfahren zum Expandieren von Behältnissen (10) mittels eines gasförmigen Mediums, wobei eine Düseneinrichtung (4) an oder in eine Mündung (10a) des Behältnisses (10) geführt wird um dieses mit dem gasförmigen Medium zu befüllen, und wobei ein Wandungskörper (6) um den Außenumfang der Mündung (10a) geschoben wird, wobei eine Dichtungseinrichtung (8, 28) in radialer Richtung an den Außenumfang der Mündung (10a) des Behältnisses (10) angelegt wird, um einen zwischen dem Behältnis (10) und dem Wandungskörper (6) liegenden Raum (R) abzudichten,
**dadurch gekennzeichnet, dass**
die Dichtungseinrichtung (8, 28) einen Abdichtbereich (8d, 28d) aufweist, der während des Expansionsvorgangs zwischen einem Mündungsrand des Behältnisses (10) und der Düseneinrichtung (4) liegt.

## Claims

1. Apparatus (1) for expanding containers (10) by means of a gaseous medium, comprising a nozzle device (4) which fills the container (10) with the gaseous medium, and comprising a wall element (6) which completely surrounds at least one region of the nozzle device (4) in the circumferential direction, and comprising a sealing device (8, 28) for sealing off a space (R) between the container (10) and the wall element (6), wherein the sealing device (8, 28) can be pressed in a substantially radial direction against an outer circumference of the container (10), **characterised in that** the sealing device (8, 28) has a sealing region (8d, 28d) which, at least during the expansion process, protrudes into a region located between the container (10) and the nozzle device (4) in the longitudinal direction (L) of the container.

2. Apparatus (1) according to claim 1, **characterised in that** the sealing region (8d, 28d) is arranged above the mouth (10b) of the container (10) during the expansion process.

3. Apparatus (1) according to at least one of the preceding claims, **characterised in that** the sealing region (8d, 28d) has an annular cross section.

4. Apparatus (1) according to at least one of the preceding claims, **characterised in that** the sealing device (8, 28) has a supporting section (8a, 28a) which extends in a longitudinal direction (L) of the container (10) and which can be pressed in the radial direction against a thread (10a) of the container (10).

5. Apparatus (1) according to claim 1, **characterised in that** the nozzle device (4) has a cross section which is adapted to a cross section of the mouth (10b) of the container (10) to be expanded.

6. Apparatus (1) according to claim 1, **characterised in that** the apparatus has an opening (14), through which a space located radially outside with respect to the sealing device (8, 28) can also be acted upon by the gaseous medium during the blowing process.

7. Apparatus (1) according to at least one of the preceding claims, **characterised in that** the sealing device (8, 28) is supported in the longitudinal direction (L) of the nozzle device (4) against a supporting region (6a) of the wall element (6).

8. Apparatus (1) according to at least one of the preceding claim, **characterised in that** the sealing device (8, 28) has a first holding section (8b, 28b) which is arranged fixedly relative to the wall element (6).

9. Apparatus (1) according to claim 9, **characterised in that** the sealing device (8, 28) has a bearing region (8c, 28c) which bears against the wall element (6).

10. Apparatus (1) according to claim 9, **characterised in that** the bearing region (8c) has a curved section (8f).

11. Apparatus (1) according to claim 9, **characterised in that** the bearing region (8c, 28c) is movable in the radial direction relative to the wall element (6).

12. Apparatus (1) according to claim 8, **characterised in that** the bearing region (8c, 28c) is arranged below the supporting section (8a, 28a) in the longitudinal direction (L).

13. Apparatus (1) according to claim 8, **characterised in that** the first holding section (8d, 28d) is arranged above the supporting section (8a, 28a).

14. Apparatus (1) according to at least one of the preceding claims, **characterised in that** the nozzle device (4) has an annular bearing surface which can be pressed onto a rim of the container (10) over the sealing region (8d, 28d) .

15. Method for expanding containers (10) by means of a gaseous medium, wherein a nozzle device (4) is guided onto or into a mouth (10a) of the container (10) in order to fill the latter with the gaseous medium, and wherein a wall element (6) is pushed around the outer circumference of the mouth (10a), wherein a sealing device (8, 28) is placed against the outer circumference of the mouth (10a) of the container (10) in the radial direction in order to seal off a space (R) between the container (10) and the wall element (6), **characterised in that** the sealing device (8, 28) has a sealing legion (8d, 28d) which, during the expansion process, is located between a mouth rim of the container (10) and the nozzle device (4).

## Revendications

1. Dispositif (1) pour l'expansion de récipients (10) au moyen d'un milieu gazeux, avec un dispositif à buse (4) qui remplit le récipient (10) avec le milieu gazeux, avec un corps de paroi (6) qui entoure entièrement au moins une partie du dispositif à buse (4) en direction circonférentielle, et avec un dispositif d'étanchéité (8, 28) pour rendre étanche un espace (R) entre le récipient (10) et le corps de paroi (6), ledit dispositif d'étanchéité (8, 28) pouvant être serré dans une direction sensiblement radiale contre un contour extérieur du récipient (10),
**caractérisé en ce que**
le dispositif d'étanchéité (8, 28) comporte une zone d'étanchéité (8d, 28d) qui, au moins pendant le processus d'expansion, fait saillie dans une zone comprise entre le récipient (10) et le dispositif à buse (4) dans la direction longitudinale (L) du récipient.

2. Dispositif (1) selon la revendication 1,
**caractérisé en ce que**,
pendant le processus d'expansion, la zone d'étanchéité (8d, 28d) est située au-dessus de l'embouchure (10b) du récipient (10).

3. Dispositif (1) selon au moins une des revendications précédentes,
**caractérisé en ce que**
la zone d'étanchéité (8d, 28d) présente une section transversale annulaire.

4. Dispositif (1) selon au moins une des revendications précédentes,
**caractérisé en ce que**
le dispositif d'étanchéité (8, 28) comporte une partie d'appui (8a, 28a) s'étendant dans la direction longitudinale (L) du récipient (10), qui peut être serrée dans la direction radiale contre un filet (10a) du récipient (10).

5. Dispositif (1) selon la revendication 1,
**caractérisé en ce que**
le dispositif à buse (4) présente une section transversale ajustée à une section transversale de l'embouchure (10b) du récipient (10) à expanser.

6. Dispositif (1) selon la revendication 1,
**caractérisé en ce que**
le dispositif comporte une ouverture (14) par laquelle un espace radialement extérieur par rapport au dispositif d'étanchéité (8, 28) peut aussi être soumis au milieu gazeux pendant le processus de soufflage.

7. Dispositif (1) selon au moins une des revendications précédentes,
**caractérisé en ce que**
le dispositif d'étanchéité (8, 28) s'appuie contre une zone d'appui (6a) du corps de paroi (6) dans la direction longitudinale (L) du dispositif à buse (4).

8. Dispositif selon au moins une des revendications précédentes,
**caractérisé en ce que**
le dispositif d'étanchéité (8, 28) comporte une première partie de maintien (8b, 28b) fixement disposée vis-à-vis du corps de paroi (6).

9. Dispositif (1) selon au moins une des revendications précédentes,
**caractérisé en ce que**
le dispositif d'étanchéité (8, 28) comporte une zone d'application (8c, 28c) adjacente au corps de paroi (6).

10. Dispositif (1) selon la revendication 9,
**caractérisé en ce que**
la zone d'application (8c) comporte une partie bombée (8f).

11. Dispositif (1) selon la revendication 9,
**caractérisé en ce que**
la zone d'application (8c, 28c) est déplaçable par rapport au corps de paroi (6) dans la direction radiale.

12. Dispositif (1) selon la revendication 9,
**caractérisé en ce que**
la zone d'application (8c, 28c) est située en dessous de la partie d'appui (8a, 28a) dans la direction longitudinale (L).

13. Dispositif (1) selon la revendication 8,
**caractérisé en ce que**
la première partie de maintien (8d, 28d) est située au-dessus de la partie d'appui (8a, 28a).

14. Dispositif (1) selon au moins une des revendications précédentes,
**caractérisé en ce que**
le dispositif à buse (4) comporte une surface de butée annulaire, qui peut être serrée par la zone d'étanchéité (8d, 28d) sur un bord du récipient (10).

15. Procédé d'expansion de récipients (10) au moyen d'un milieu gazeux, un dispositif à buse (4) étant guidé contre ou dans une embouchure (10a) du récipient (10) pour remplir celui-ci de milieu gazeux, et un corps de paroi (6) étant mis en place autour du contour extérieur de l'embouchure (10a), un dispositif d'étanchéité (8, 28) étant appliqué contre le contour extérieur de l'embouchure (10a) du récipient (10) dans la direction radiale pour rendre étanche un espace (R) compris entre le récipient (10) et le corps de paroi (6).
**caractérisé en ce que**
le dispositif d'étanchéité (8, 28) comporte une zone d'étanchéité (8d, 28d) située entre un bord de l'embouchure du récipient (10) et le dispositif à buse (4) pendant le processus d'expansion.
